Europäisches Patentamt

European Patent Office

Office européen des brevets

(19)

(11) Publication number: **0 029 195**
**B1**

(12) # EUROPEAN PATENT SPECIFICATION

(45) Date of publication of patent specification: **08.02.84**

(51) Int. Cl.³: **G 01 N 21/41**

(21) Application number: **80106913.9**

(22) Date of filing: **10.11.80**

(54) Method of determining the refractive index profile of an optical fibre.

(30) Priority: **15.11.79 IT 6921279**

(43) Date of publication of application:
**27.05.81 Bulletin 81/21**

(45) Publication of the grant of the patent:
**08.02.84 Bulletin 84/6**

(84) Designated Contracting States:
**DE FR GB NL**

(56) References cited:

**OPTICAL AND QUANTUM ELECTRONICS, vol. 11, no. 2, March 1979, London, GB K. WHITE "Practical application of the refracted near field technique for the measurement of optical fibre refractive index profiles". pages 185-196**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Di Vita, Pietro**
**C.so Francia, 357**
**Torino (IT)**

(74) Representative: **Riederer Freiherr von Paar zu Schönau, Anton et al,**
**Freyung 615 Postfach 2664**
**D-8300 Landshut (DE)**

Courier Press, Leamington Spa, England.

## Method of determining the refractive index profile of an optical fibre

The present invention relates to optical fibres and more particularly to an improved method of determining the refractive index profile of such fibres according to a near-field technique in which one fibre end is illuminated by an incoherent source and the power distribution of light emerging from the other end of said fibre after passage therethrough is measured by a detector.

In case of a Lambretian source (that is a source with constant radiance) and in the absence of the so-called leaky skew rays (that is rays undergoing optical tunnel effect) the power distribution at the output end of the fibre is given by the following relation:

$$I = k[n^2(r) - n^2_e] \qquad (1)$$

where $n(r)$ is the refractive index of the fibre core at a distance $r$ from the axis, $n_e$ is the refractive index of the medium allowing the guidance, more particularly of the fibre cladding, and $k$ is a proportionality factor.

The use of the near-field technique is particularly interesting as neither a particular preparation of the fibre nor a sophisticated measuring apparatus are required. However a number of problems limit the possibility of employing of this technique.

A first problem is the elimination of leaky skew rays: they may be eliminated in a simple way only in fibres with step refractive index profile, in which all such rays propagate with an angle greater than a certain angle and then can be eliminated merely by the use of a diaphragm; on the contrary in fibres with graded index profile such rays are intimately mixed with the others and their extinction depends on many parameters, not easy to control, that may alter the distribution of the collected power.

A second problem is that the near-field technique does not allow detection of refractive-index values lower than the index of the medium allowing the guidance: in fact the method is based on the detection of the power guided by the fibre, and at the points in which the fibre index is lower than that of the surrounding medium light rays disperse ouside.

A third problem is that in the case of a single-mode fibre, or of a fibre with a small number of modes (therefore of fibres with very small cross section) relation (1) is no longer satisfied.

To solve the first problem and to use the near-field technique also for the fibres with graded index profile a correction factor to be introduced into relation (1) has been theoretically determined: but the application of this factor gives reliable results only for fibres with perfectly circular symmetry, and then it represents only a partial solution to the first problem without giving any contribution to the solution of the remaining two problems.

To solve all these problems a modifed near-field technique has been proposed, known as "refracted near-field", whose application has been described for instance by K.I. White in the paper entitled "Practical application of the refracted near-field technique for the measurement of optical fibre refractive-index profiles", OPTICAL AND QUANTUM ELECTRONICS, Vol 11, No. 2, London, March 1979, pages 185—196.

This method in which a laser is used and in which the power lost instead of the power guided in the fibre is determined presents the disadvantage that the relation between the measured power and the index profile is only approximately linear and therefore it requires empirical adjustments of the measurement apparatus that may hinder an accurately repeatable measurement.

The present invention as defined in the claim provides a method of measuring the refractive index according to a near-field technique, that does not require complex apparatus and offers valid results also for fibres with graded refractive index profile, for single-mode fibres and for fibres whose refractive index, near the medium allowing the guidance, is lower than that of said medium.

As the guide referred to in the claim has the step index profile, the problem of leaky skew rays can be solved immediately; besides, due to the choice of the refractive indices no point in the core of said guide has refractive index inferior to that of the cladding; finally as the cross-sectional area of the guide is larger than that of the original fibre, the guide acts as a multimode guide.

The foregoing and other characteristics of the invention will be more apparent from the following description and the annexed drawings, in which:

Fig. 1 is a schematical representation of a conventional apparatus for measuring the refractive index by the near-field technique, in which the present invention is used.

Fig. 2 is an enlarged cross sectional view along the line II—II of Fig. 1; and

Fig. 3 is a diagram of the refractive index versus the radius in the guide of Fig. 2.

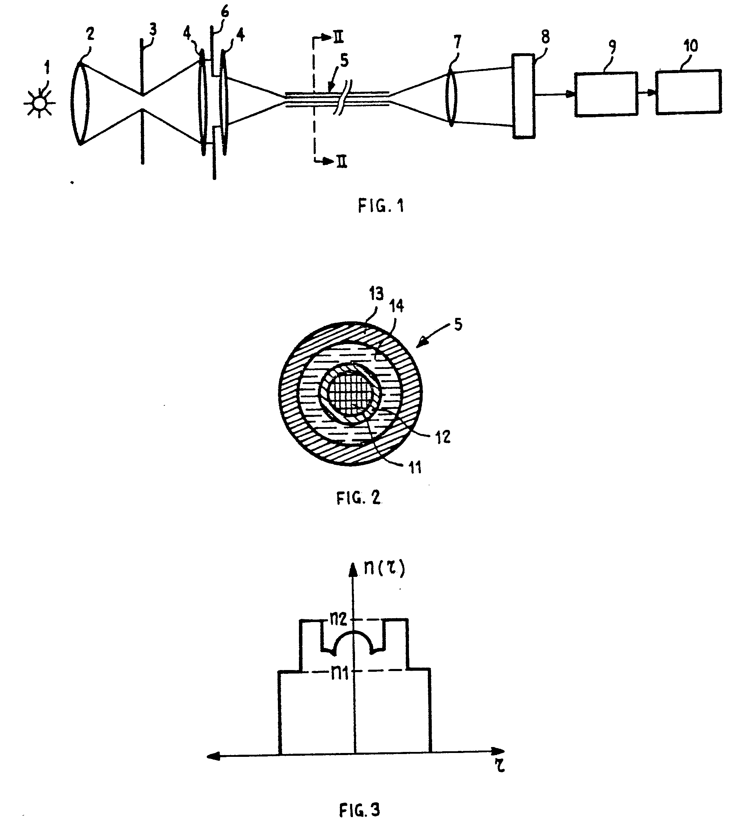

In Fig. 1 the light emitted from an incoherent source 1 (e.g. a tungsten-halogen lamp) is collected by a condenser 2 that forms an image thereof on a first diaphragm 3 acting as the actual source; the beam energing from diaphragm 3 is collimated by a microscope objective (schematically represented by lenses 4), and focused on the input end of a multimode optical waveguide 5, with step refractive index profile. The structure of guide 5 will be described with reference to Figures 2 and 3.

The light entering guide 5 is limited by a second diaphragm 6, inserted between lenses 4, with an aperture such that it does not excite leaky skew rays.

Light outgoing from guide 5 is collected by a second microscope objective 7; this forms an image of the end of the guide, and this image is scanned along its diameter by a photodetector 8, whose output is connected to a power meter 9 and to a recording device 10.

The means controlling the displacement of photodetector 8 are not represented in order to make the drawing simpler.

In order to provide the optical guide 5 utilized for the measurement, the fibre whose refractive index is to be determined, formed by core 11 and cladding 12 (Fig. 2), is contained within a capillary tube 13 of transparent material, filled with liquid 14, that is held within the capillary tube 13 by surface tension.

The material of the capillary tube must have a refractive index $n_1$ (Fig. 3) which is lower than the minimum of the refractive index of fibre 11, 12 under test (Fig. 2), by a value at least equal to the difference between the maximum index of the fibre core and the index of the fibre cladding; liquid 14 must have a refractive index $n_2$ (Fig. 3) higher than the maximum value of the refractive index of fibre 11, 12 (Fig. 2). In this way a guide is obtained whose "cladding" is represented by capillary tube 13, while the "core" is formed by liquid 14 and the fibre under test 11, 12.

The capillary tube can be made for instance of glass doped with fluorine or boron, or a plastic material, whose refractive index is inferior to the one of quartz from which the fibres are obtained. Several liquids have refractive index higher than that of quartz: examples are glycerines, a number of oils (e.g. linseed oil, almond oil, sandal oil, citron oil, clove oil), cinnamon aldehyde, iodine, naphthalene, potassium and mercury iodide, methylene iodide with sulphur, carbon sulphide, benzene etc.

All these liquids are usually used in optics in refractometric tests or as refractive-index matching fluids, and therefore are easily available. Since the range of values of the refractive index of an optical fibre is approximately known a priori, the choice of the liquid is not a problem.

Under the conditions stated above for refractive indices $n_1$, $n_2$, the guide presents a step refractive index profile, as shown in Fig. 3, and nowhere is the refractive index of its "core" lower than that of the "cladding". Leaky skew rays can then be eliminated if the angle subtended by the aperture of a diaphragm 6 does not exceed an angle $v = \text{arcsine } \sqrt{n_2^2 - n_1^2}$ (supposing that guide 5 is in the air); in addition, there are no longer power losses, like those caused by the possible zone in which the refractive index of core 11 of the original fibre was lower than the one of cladding 12.

Finally, the increased dimensions of core 11, 12, 14 of the guide with respect to the dimensions of the original core ensure the guide multimodality.

**Claim**

Method of determining the refractive index profile of an optical fibre according to a near-field technique in which one fibre end is illuminated by an incoherent source and the power distribution of light emerging from the other end of said fibre after passage therethrough is measured by a detector, characterised in that during said determination said fibre is contained within a transparent capillary tube having a refractive index lower than the minimum refractive index of said fibre and filled with a liquid having a refractive index higher than the maximum refractive index of said fibre, the capillary tube, the liquid and the fibre forming together a multimode optical guide with a step refractive index profile, in which the cladding is represented by the capillary tube and the core is represented by the combination of the liquid and the fibre under test.

**Patentanspruch**

Verfahren zur Bestimmung der Brechungsindexverteilung einer optischen Faser gemäß einer Nahfeldtechnik, bei der ein Faserende durch eine inkohärente Quelle beleuchtet wird und die Energieverteilung des am anderen Ende der Faser austretenden Lichts, nachdem es durch die Faser gelaufen ist, durch einen Detektor gemessen wird, dadurch gekennzeichnet, daß man die Faser während dieser Bestimmung in einem transparenten Kapillarrohr mit einem Brechungsindex, der niedriger liegt als das Minimum des Brechungsindex der Faser, und das mit einer Flüssigkeit gefüllt ist, deren Brechungsindex höher ist als das Maximum des Brechungsindex der Faser, befindlich hält und das Kapillarrohr, die Flüssigkeit und die Faser zusammen einen mehrmodigen optischen Wellenleiter mit stufiger Brechungsindexverteilung bilden, dessen Überzug durch das Kapillarrohr und dessen Kern durch die Kombination der Flüssigkeit und der getesteten Faser dargestellt wird.

**Revendication**

Procédé pour déterminer le profil d'indice de réfraction d'une fibre optique suivant une technique en champ proche, où on éclaire une extrémité de la fibre au moyen d'une source incohérente et on mesure par un détecteur la distribution de puissance de la lumière sortant de l'autre extrémité de la fibre après être passée dans celle-ci, caractérisé en ce que pendant la détermination la fibre est contenue dans un capillaire transparent, ayant un indice de réfrac-

**0 029 195**

tion inférieur au minimum de l'indice de réfraction de ladite fibre, et qui et rempli d'un liquide, dont l'indice de réfraction est supérieur au maximum de l'indice de réfraction de la fibre, l'ensemble de capillaire, du liquide et de la fibre constituant un guide optique multimode à saut d'indice de réfraction, où la gaine est représentée par le capillaire, tandis que le coeur est représenté par l'ensemble du liquide et de la fibre à analyser.

0 029 195

FIG. 1

FIG. 2

FIG. 3

1